# FASCICULE DE BREVET EUROPEEN

(11) **EP 0 461 964 B1**
(45) Date de publication et mention de la délivrance du brevet: **14.02.1996**
(21) Numéro de dépôt: 91401488.1
(22) Date de dépôt: 07.06.1991
(51) Int. Cl.: F16L 55/26, G21C 17/00

(54) **Véhicule autopropulsé et articulé à vérins télescopiques pour l'inspection de tuyauteries**
Selbstangetriebenes Gelenkfahrzeug mit teleskopischen Andruckzylindern zur Rohrinspektion
Self-propelled articulated vehicle with telescopic jacks for pipeline inspection

(30) Priorité: 11.06.1990 FR 9007383
(43) Date de publication de la demande: 18.12.1991
(73) Titulaire: ECOLE SUPERIEURE DES SCIENCES ET TECHNOLOGIES DE L'INGENIEUR DE NANCY (ESSTIN), F-54500 Vandoeuvre (FR)
(72) Inventeur: LEONARD, André, F-54280 Seichamps (FR)
(74) Mandataire: Madeuf, René Louis

(56) Documents cités:
- EP-A- 0 164 557
- EP-A- 0 177 112
- FR-A- 2 638 813
- REVUE FRANCAISE DE MECANIQUE No 1987-4

## Description

La présente invention a pour objet un véhicule autopropulsé utilisable notamment pour se déplacer dans des tuyauteries pour porter des appareils d'inspection. Ce véhicule est conçu pour intervenir dans des réseaux divers urbains comme les égouts, eaux, drainage, gaines de ventilation, potences et pylônes creux, mais également en milieux industriels. Il pourrait porter des outils et transporter des outillages pour effectuer des missions de travail nécessitant de faibles efforts avec un outillage spécialisé. Il est destiné à se déplacer sur de grandes distances et est relié à l'extérieur par un ombilic.

On a déjà conçu des véhicules pouvant se déplacer dans des espaces compris entre des parois sensiblement parallèles et les tubes. Les appareils connus se déplacent en utilisant une grande partie de l'espace dans lequel ils se meuvent et sont donc dans l'impossibilité de franchir des obstacles, ainsi que des modifications de la géométrie des tubes comme des raccordements de tuyauteries.

Les véhicules connus, tels le chariot autonome selon le brevet français FR 2 172 687 et celui cité dans la Revue Française de mécanique 1987-4, se déplacent sur roues pour le premier, sur des chenilles pour le second sans pouvoir se diriger et roulent en suivant le tube, ils ne peuvent franchir que de faibles pentes dans la limite de leur adhérence assurée par le poids des appareils, un obstacle au fond du tube les empêchant de progresser.

Le véhicule d'escalade tel que celui présenté sous le nom "Merite" à la page 311 de la revue précédemment mentionnée et qui utilise deux roues motrices et quatre pattes repliables assurant l'appui sur les parois par des boules sphériques, s'il peut se diriger en évitant certains obstacles, ses roues en forme de sphères rendent sa progression impossible dans des parcours ayant des rugosités importantes sur les parois. Sa capacité de traction étant limitée à l'adhérence de ses deux roues motrices pour six roues en contact, il ne peut donc tracter un ombilic sur une grande distance.

Le véhicule connu par FR-A- 2 530 214 utilise un module avec deux roues motrices et deux roues libres en rotation pour assurer l'adhérence. Il peut se diriger en suivant de près les parois, mais proche de celles-ci il ne peut éviter les gros obstacles tels que les doigts de gant. Son adhérence est également limitée à ses deux roues motrices. Le véhicule est également instable. En effet dès qu'une roue a perdu le contact avec la paroi, le véhicule se trouve déséquilibré. Sa faible adhérence ne lui permet pas de tracter un ombilic sur une grande distance.

L'appareil selon DE-A-2 640 055 est un manipulateur utilisant des ensembles de trios de vérins pour se centrer et non pour assurer son adhérence sur les parois car ses roues ne sont pas motrices, il n'est pas un véhicule automoteur capable de se propulser, il est descendu en position de travail par gravité.

Le véhicule selon EP-A-0 181 558 se déplace en roulant au fond des tubes en assurant son adhérence grâce à un jeu de roues poussées par un vérin. La position de ses roues motrices ne lui permet pas de se diriger dans le tube et donc d'éviter les obstacles. La disposition des éléments mécaniques oblige le véhicule à constamment maintenir le contact avec l'ensemble de ses roues sous peine de rouler dans une position qui risquerait de lui faire perdre son équilibre sans lui permettre de le rétablir.

Le véhicule selon EP-A-0 085 504 se déplace en roulant au fond de tubes, spécialement des pipelines. Maintenu par trois bras, il est sensiblement dans l'axe du tuyau grâce à des dispositions élastiques. Il se déplace par reptation sans pouvoir se diriger. Le véhicule ne peut éviter un raccordement de tuyauterie ou un obstacle.

Le véhicule selon FR-A-2 638 813, qui a été utilisé pour énoncer le préambule de la revendication principale annexée, est composé de plusieurs parties qui peuvent se porter mutuellement pour franchir des obstacles, il possède des trios de vérins télescopiques à vis qui lui permettent un centrage dans le tube, toutefois ses roues ne sont pas directionnelles et, pour franchir des obstacles, il doit se faire porter par une partie des autres éléments. Sa nécessaire robustesse le rend lourd, il occupe une place relativement importante dans le tube par rapport à des obstacles en saillie dans le tube. Son poids et la puissance nécessaire pour actionner les moteurs limitent ses distances d'intervention parce qu'il est pénalisé par un ombilic volumineux.

La présente invention a justement pour but d'éliminer ces inconvénients, de permettre d'éviter les obstacles et de se déplacer sur des grandes distances.

Selon la principale caractéristique du véhicule objet de l'invention, celui-ci comprend un corps muni aux deux extrémités de tourelles portant des jeux de vérins disposés radialement pour assurer sensiblement son centrage dans un tube. Ces vérins du type simple effet actionnés avec un gaz permettent une adhérence sur les parois par l'intermédiaire de dispositifs permettant le déplacement du véhicule et disposés sur l'extrémité de la tige de chaque vérin. Le dispositif permettant le déplacement du véhicule est disposé sur l'extrémité de la tige de chaque vérin. Le déplacement du véhicule est ainsi assuré soit avec des roues, soit avec des chenilles motrices. Ces éléments permettant la traction du véhicule sont également dirigeables, ils peuvent tourner par groupe d'équipages avant et arrière, simultanément, pour permettre de diriger le véhicule.

Selon une autre caractéristique de ce véhicule, les vérins sont télescopiques et peuvent porter plusieurs tiges emboîtées les unes dans les autres et se déployant sur une variation de longueur qui permet au véhicule, au cours d'une mission, d'atteindre des diamètres très différents. Chacune de ces tiges comporte une liaison en rotation permettant de transmettre le mouvement de rotation du corps à chaque tige du vérin et à la chape de l'élément roulant qui est soit une roue, soit une chenille, pour permettre au véhicule de se diriger.

Selon un mode de réalisation préférée, la commande des rotations des vérins est assurée par un moteur qui fait tourner une roue d'engrenage centrale, celle-ci engrênée sur chaque pignon solidaire du corps du vérin peut entraîner en rotation simultanément les corps des vérins en liaison pivot dans les tourelles. Les ensembles de vérins et pour chaque tourelle sont actionnés par un moteur indépendant permettant ainsi des rotations directionnelles différentes sur les roues avant et arrière du véhicule.

Selon une autre caractéristique de ce véhicule, les vérins sont du type simple effet, avec un ressort de traction dans l'axe longitudinal du vérin pour rappeler les tiges de vérins vers la position rentrée, le ressort est accroché, d'une part, au fond du vérin et, d'autre part, à la tige centrale. Les vérins sont alimentés en gaz individuellement par une tuyauterie pénétrant à la base du vérin et par l'intérieur du corps. Les tubulures sont reliées à des distributeurs qui permettent d'alimenter individuellement les vérins en gaz. La force de pression du gaz s'oppose à l'action de rappel du ressort permettant des sorties partielles des vérins et des efforts de pression sur les roues motrices différentes sur chaque patte.

Selon une autre caractéristique de ce véhicule objet de l'invention, les tourelles sont démontables du corps du vérin. Le véhicule peut être équipé de tourelles pouvant recevoir trois vérins et de tourelles pouvant recevoir quatre vérins. Elles sont interchangeables sur le corps du véhicule suivant les missions choisies par démontage de vis de liaison.

Selon une autre caractéristique de ce véhicule objet de l'invention, les corps de vérins sont emboîtés dans les éléments tournants des tourelles. Un encliquetage à billes assure la liaison en translation du corps du vérin avec la partie tournante de la tourelle dans laquelle il est monté. La liaison en rotation du vérin est assurée par un emboîtement dont la réalisation préférée est une liaison prismatique. L'encliquetage à billes est libéré en effectuant une translation manuelle sur une bague rappelée par un ressort. Ce dispositif permet un démontage des vérins, sans outil pour faciliter l'installation du véhicule dans des cavités étroites comme les trous d'homme par exemple.

Selon une autre caractéristique de ce véhicule objet de l'invention, les tourelles des vérins peuvent être équipées de la totalité ou d'une partie de leurs vérins. Les espaces vides sont comblés par un couvercle encliqueté comme les vérins et assurant l'étanchéité dans la cavité. Cette disposition permet de dégager un espace important d'un côté du véhicule pour permettre d'éviter des obstacles entravant le passage.

Selon un mode de réalisation préféré, le gaz comprimé fourni aux vérins est produit en circuit fermé. Cette disposition permet à l'appareil de se déplacer immergé et indépendamment d'un circuit d'air passant par l'ombilic.

Selon une autre caractéristique de ce véhicule objet de l'invention, les roues actionnées chacune par un moteur disposant d'un réducteur de vitesse peuvent être commandées à des vitesses différentes. Cette disposition a sa raison d'être en particulier pour permettre des mouvements du véhicule quand celui-ci est uniquement porté par les roues d'une extrémité ; les vérins appliquent leurs efforts pour assurer une adhérence suffisante par ces uniques roues mues par leurs moteurs respectifs, alors que les autres vérins ont leurs tiges rentrées pour permettre de réduire l'encombrement du véhicule et des mouvements face à un obstacle.

Cette possibilité d'alimenter indépendamment les moteurs et même de supprimer cette alimentation permet des manoeuvres de franchissement de coudes et d'obstacles. Le véhicule peut également, quand il roule avec quatre roues sur une surface plane, recevoir sur les roues d'un côté et de l'autre du véhicule des sens de rotation différents et se comporter comme un char qui glisse et pivote sur ses éléments roulants.

Selon une autre caractéristique de ce véhicule objet de l'invention, chaque roue est disposée pour être guidée en rotation d'un côté par une liaison pivot également du côté du moteur. Les roues ainsi disposées permettent au véhicule de rouler sur des surfaces planes et d'appuyer sur les couples de roues, d'une part, à l'avant et, d'autre part, à l'arrière du véhicule.

Selon une autre caractéristique de ce véhicule objet de l'invention, les éléments roulants peuvent être des chenilles si les missions le nécessitent. Les chenilles sont disposées pour former un plan incliné vers le sens d'avance du véhicule, et permettre de monter sur des obstacles sensiblement de la dénivelée du plan incliné. Le contact entre la chenille et la surface de contact perpendiculaire à l'axe de symétrie du vérin est localisé par une surface courbe donnée par le galet moteur de la chenille. Cette disposition permet de limiter l'étendue de la surface de la chenille en contact avec le tube dans l'axe du vérin, facilitant la rotation du vérin autour de cet axe. La rotation de chaque chenille est assurée par un moteur commandé indépendamment et placé selon un mode de réalisation préféré en arrière du plan incliné. Le mouvement de rotation du moteur est transmis au galet moteur de la chenille par une courroie. La chenille présente un dispositif de galet intermédiaire pour lui permettre de ne pas fléchir face à un obstacle. Un dispositif de tension permet à la chenille d'être tendue.

Selon une autre caractéristique de ce véhicule objet de l'invention, dans son centre il est séparé en deux parties liées par un pivot motorisé. Dans sa réalisation préférée, l'articulation en chape est, pour chacune de ses parties, solidaire d'un demi-bâti du véhicule. Un arbre cannelé constituant l'axe du pivot de la chape est lié en rotation à un élément de la chape, alors que l'arbre est lui-même lié en rotation à l'arbre du moteur ; le moteur étant solidaire de l'autre partie de la chape. Le pivotement de la chape est ainsi soumis à la rotation du moteur associé à un réducteur de vitesse. L'effort maintenu par le moteur associé à un faible rendement du réducteur permet de raidir le pivot et donc l'ensemble du corps du véhicule, inversement la désactivation du moteur permet de libérer le pivot et d'autoriser une rotation libre.

Selon une autre caractéristique de ce véhicule objet de l'invention, celui-ci est relié à un poste de commande par un ombilic porteur des câbles de transmission de l'énergie électrique et de commande. Suivant une disposition particulière pour permettre des déplacements sur des grandes distances, le câble est enroulé sur un enrouleur porté par le véhicule et également un enrouleur extérieur à la canalisation dans laquelle se trouve le véhicule.

Le véhicule, pour pouvoir se déplacer, a entre autres besoin d'une observation par une caméra transmettant les informations au poste de commande par l'ombilic. La caméra permet de suivre l'évolution du véhicule mais également de faire des observations. La caméra est mue par un mécanisme qui lui permet d'observer dans les diverses directions de l'espace. Il est possible de monter sur le véhicule d'autres outils et moyens de contrôle.

L'invention est ainsi énoncée à la revendication 1 annexée.

D'autres caractéristiques et avantages de l'invention ressortiront de la description qui va suivre, donnée à titre d'exemple purement illustratif et nullement limitatif, en référence aux dessins annexés.

Ces diverses caractéristiques ressortent des revendications 2 à 18.

La figure 1 est un schéma illustrant la disposition générale du véhicule, avec son environnement, disposé dans une canalisation et ses liaisons avec l'extérieur.

La figure 2 est une vue en perspective du véhicule dans un tube.

La figure 3 est une coupe longitudinale de la partie avant du véhicule avec une chenille comme élément propulseur et le dispositif d'observation par caméra.

La figure 4 est une coupe transversale du corps du véhicule par la tourelle montrant une disposition avec trois vérins et des roues disposées dans un tube circulaire et également dans une gaine rectangulaire, roulant sur un plan, avec les vérins partiellement déployés.

La figure 5 est une vue en coupe transversale du corps du véhicule par la tourelle montrant la disposition avec quatre vérins et des roues.

La figure 6 est une coupe transversale du corps du véhicule par la tourelle montrant une disposition avec quatre cavités pour vérins dont un a été enlevé à la partie supérieure et la cavité fermée.

La figure 7 est une coupe transversale du corps au niveau de son articulation centrale.

La figure 8 est une coupe longitudinale du corps du véhicule dans sa partie arrière et montrant un vérin en coupe et l'enrouleur de l'ombilic.

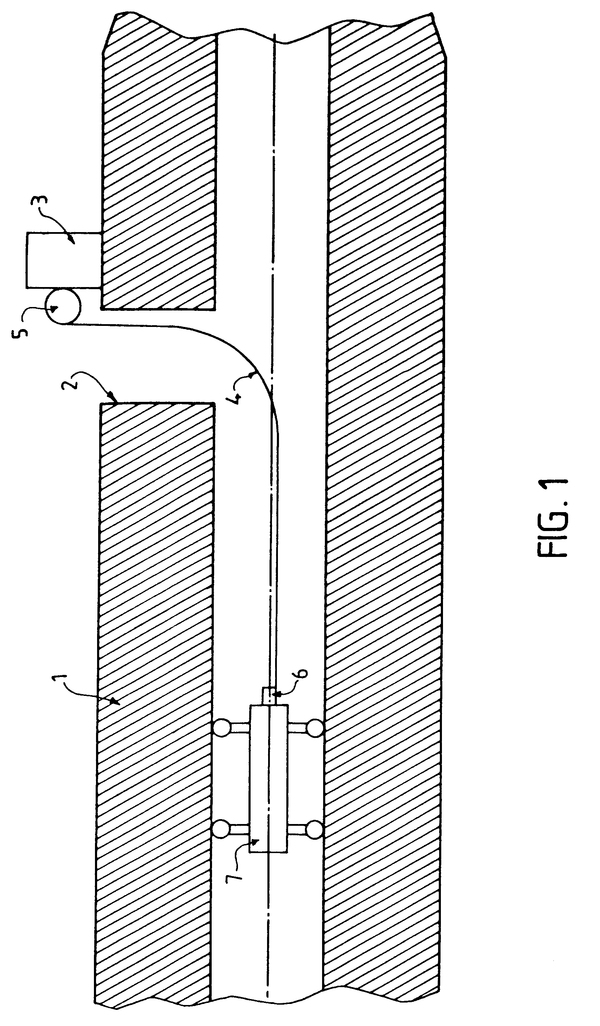

Sur la figure 1, on voit le véhicule dans une canalisation de référence générale 1, comme par exemple celle d'un réseau urbain. L'introduction de l'appareil a été faite par une ouverture 2. Un dispositif de contrôle et de commande 3 est disposé à l'extérieur de la canalisation, il est relié au véhicule par un ombilic 4 qui est déroulé au fur et à mesure de la progression dans la cavité par un enrouleur 5. Sur le véhicule représenté de manière générale en 7, un deuxième enrouleur 6 est emporté, il possède une certaine capacité de fil d'ombilic emporté. Sur une première partie de la progression, le véhicule tire derrière lui l'ombilic que déroule l'enrouleur 5, l'ombilic est tiré par le véhicule qui roule dans le tube avec une grande capacité de traction grâce à la disposition de ses éléments roulants comme celà sera décrit ultérieurement, et également grâce à l'adhérence que donne le poids supplémentaire du câble emporté dans les parcours horizontaux particulièrement. Dès que la résistance à l'avancement de l'ombilic le nécessite, l'enrouleur 6 déroule l'ombilic sans le tirer. Au retour du véhicule, sa mission accomplie, l'ombilic sera essentiellement enroulé par l'enrouleur 5 et, en cas d'impossibilité, enroulé au fur et à mesure de la progression par l'enrouleur 6.

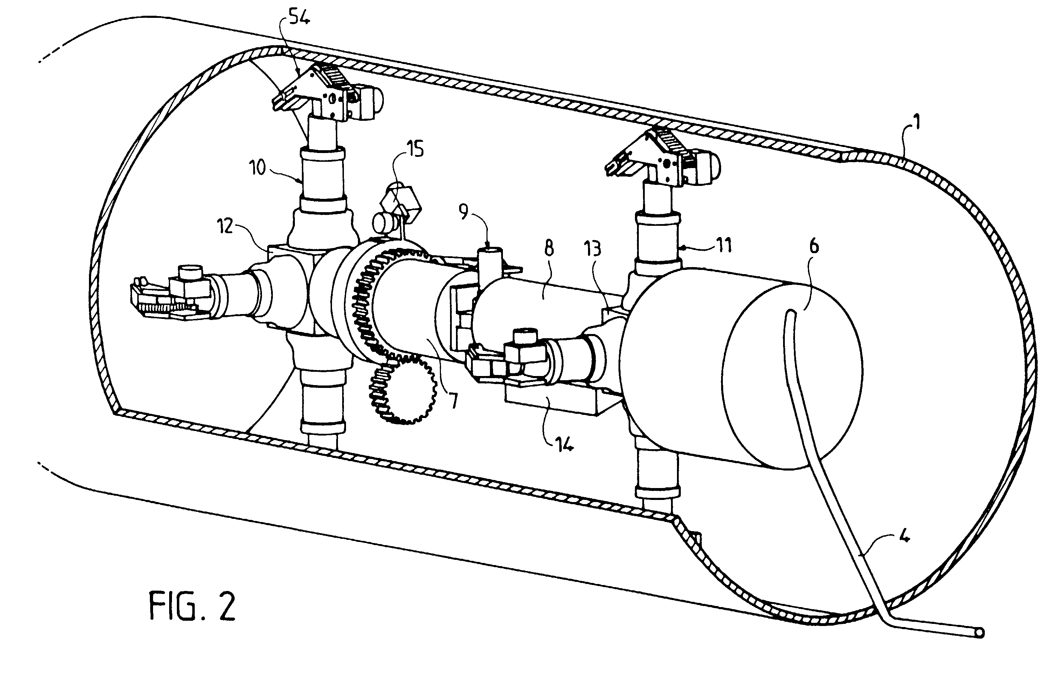

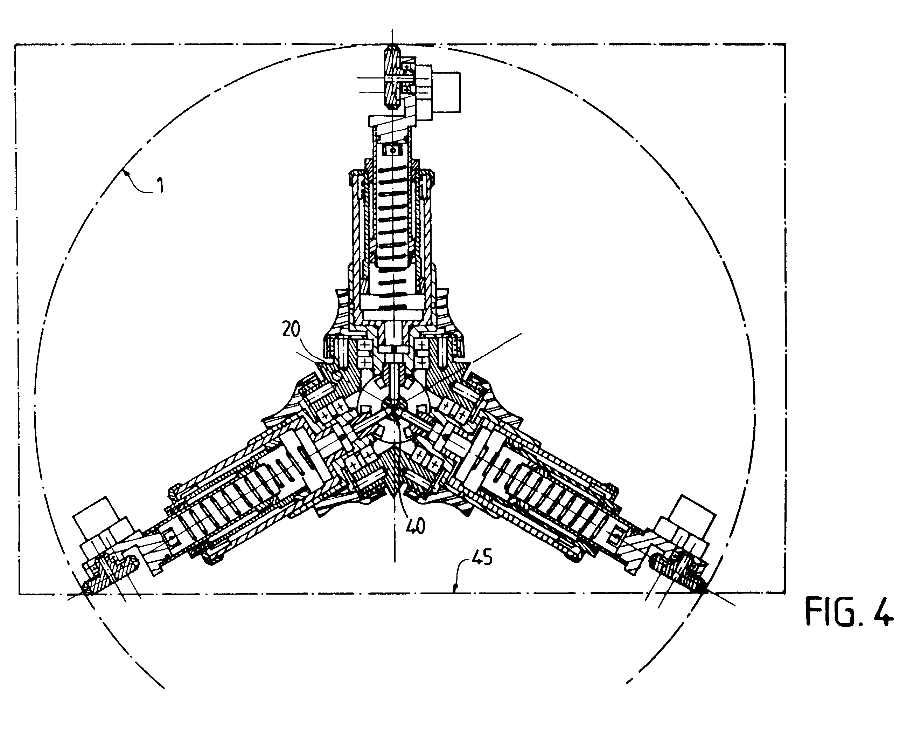

La figure 2 représente le véhicule proprement dit dans un tube. Le véhicule est composé de deux éléments 7 et 8 des bâtis constituant le corps de l'appareil. Entre ces deux bâtis est placé un pivot motorisé actionné par un moto-réducteur 9. L'axe du pivot dans lequel se trouve le moto-réducteur est parallèle à deux vérins 10 et 11 disposés l'un à l'avant et l'autre à l'arrière du véhicule. A la deuxième extrémité de chaque élément du bâti sont fixées une tourelle 12 à l'avant du véhicule et une autre 13 à l'arrière. Ces tourelles ont deux formes, interchangeables entre elles sur le bâti, l'une dispose de trois cavités, comme le montre la figure 4, pour permettre le montage de jeux de vérins, soit trois vérins formant des sortes de deux trios de colonnes ou pattes pour porter le véhicule dans son tube, l'autre disposition possède quatre cavités, comme le montre la figure 2, pour permettre le montage de quatre vérins disposés de telle sorte que des vérins soient deux à deux opposés sur un même axe et en même temps entre l'avant et l'arrière, pour que quatre vérins soient dans un même plan et les quatre autres dans un plan perpendiculaire. Le pivot central 9 est placé également dans un des plans dans lequel se trouvent quatre vérins. Cette disposition avantageuse permet au véhicule de se plier suivant son pivot central en tournant autour d'un axe formé par deux vérins solidaires du tube par adhérence soit l'axe de la colonne formé par les deux vérins avant ou l'axe formé par les deux vérins arrière plaqués sur les parois du tube ; pour ne pas gêner les mouvements, les autres vérins peuvent être rentrés comme cela sera décrit plus loin.

La figure 2 montre également l'enrouleur 6 de l'ombilic 4 fixé à la tourelle arrière 13. Egalement fixé sur le bâti du corps 8, se trouve le groupe compresseur 14 fournissant le gaz aux vérins. Le mécanisme d'observation par caméra 15 est fixé sur le bâti 7, il permet des observations comme cela sera décrit ensuite, entre les pattes du véhicule, à l'avant comme à l'arrière, pour suivre la progression du véhicule, mais aussi pour faire les observations sur l'environnement que le véhicule est chargé d'explorer.

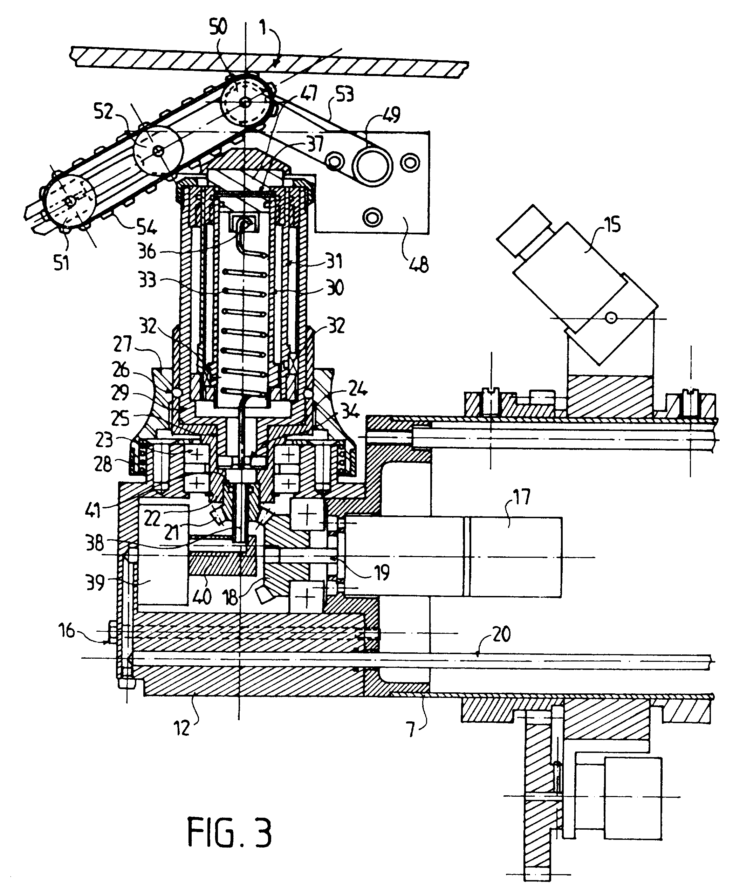

La figure 3 est un dessin en coupe longitudinale de la partie avant du véhicule. La tourelle 12 est fixée par des vis 16 et positionnée sur le bâti 7, ce qui permet un démontage rapide pour permettre de placer, par exemple, une autre tourelle portant soit trois, soit quatre pattes. Les parties liées au bâti 7 sont : le moto-réducteur 17 et son engrenage 18 conique solidaire de l'arbre de sortie 19 du réducteur, elles sont utilisées et communes pour les dispositions avec quatre ou trois vérins. L'arrivée d'air 20 venant du groupe d'alimentation en gaz pour les vérins débouche dans la tourelle, par une cavité sur laquelle est assurée une étanchéité, et cela pour les deux dispositions des tourelles.

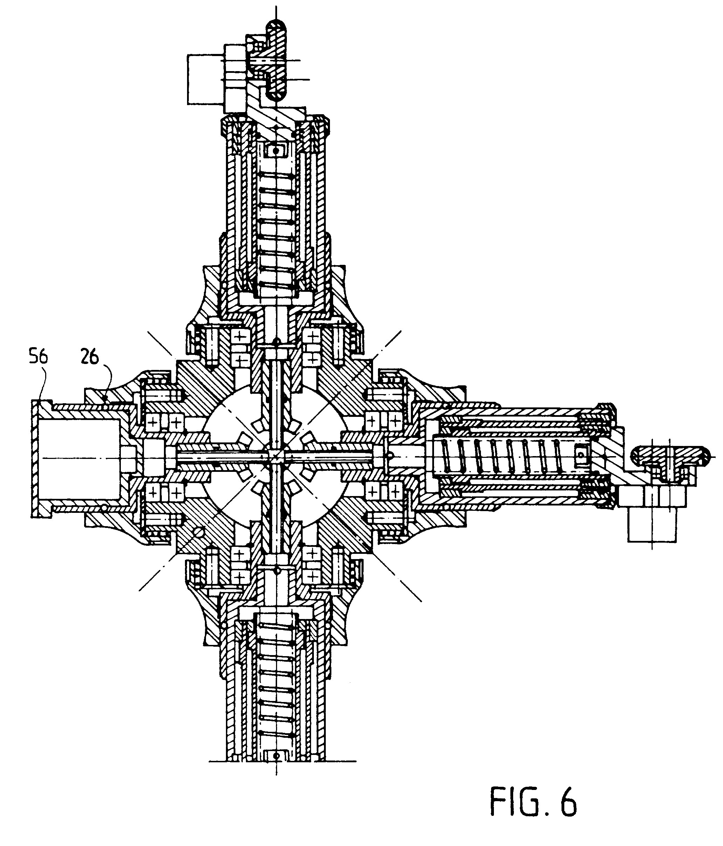

L'engrenage 18 s'engrène sur les pignons coniques 21 des vérins, solidaire d'un fourreau 22 pivotant dans les roulements 23 qui assurent sa rotation. Le fourreau 22 dispose d'une forme comme, par exemple, un hexagone 25 permettant une liaison en rotation avec le fond du vérin 29, mais également une portée 24 assurant l'étanchéité au gaz. Le fourreau possède également un dispositif d'indexage avec, dans cet exemple, des billes 26 emprisonnées par un manchon 27 qui est rappelé en position fermée par un ressort 28 pour permettre de lier en translation le vérin 29 avec le fourreau 22. Les billes sont placées dans des trous du fourreau 22 et pénètrent dans une gorge circulaire et de section trapézoïdale du vérin 29 dans laquelle elles se trouvent maintenues par le manchon 27 qui les emprisonne pour assurer cette liaison en translation longitudinale entre le vérin 29 et le fourreau 22 et supporter les efforts occasionnés par la poussée des gaz. Cette disposition permet l'emboîtement et le déboîtement du corps du vérin 29 de la tourelle dont le fourreau 22 est solidaire. L'opération de déboîtement se fait en glissant le manchon 27 vers le haut sur cette figure, en comprimant le ressort 28, la bille peut alors sortir de la gorge du vérin 29 et ainsi permettre l'extraction du vérin 29 du fourreau 22. Ce démontage rapide permet de mettre des vérins ou pattes-colonnes de longueurs différentes, en particulier pour les adapter au plus près des diamètres des tubes dans lesquels le véhicule se déplace. Cette possibilité d'enlever des pattes permet également de réduire occasionnellement l'encombrement du véhicule pour le passer dans d'étroits trous d'homme au moment de son introduction dans le tube. Cette disposition de démontage rapide permet également de choisir de ne pas utiliser toutes les pattes dans le cas d'une mission spécifique, comme le montre la figure 6.

La figure 3 montre également un exemple de disposition adoptée pour les vérins à tiges télescopiques. Dans cet exemple de réalisation, le vérin 39 dispose de deux tiges creuses 30 et 31. Ces tiges sont liées en rotation l'une à l'autre par une clavette 32. Un ressort de traction 33, dans l'axe central de symétrie du vérin est accroché, d'une part, au vérin 29 par un axe d'accrochage 34 et, d'autre part, par un axe 36 à la tige centrale 30 liée par une pièce 47 à la chape 48 portant les éléments entraînant le déplacement du véhicule. Dans cet exemple, la chape 48 et la pièce 47 sont solidaires et portent les éléments de propulsion. Ils sont liés par une goupille 37 à 30. La pression des gaz qui arrive par l'orifice 38 permet aux tiges de sortir du vérin, équilibrées par la force de rappel du ressort 33, les tiges peuvent donc être sorties partiellement et exercer une force variable sur les parois du tube 1 suivant les pressions exercées par le gaz.

Le gaz sous pression arrive par 20 du compresseur embsrqué, alimente les distributeurs 39 qui distribuent individuellement par 40 et 38 le gaz, vers chaque vérin. L'étanchéité est assurée entre le pignon 21 et l'orifice 38 par un joint 41 ; le pignon 21 peut donc tourner alors que les éléments 40 et 38 liés au distributeur sont fixés.

La rotation du moteur 17 et de son arbre de sortie 19 lié à l'engrenage 18, entraîne simultanément la rotation des pignons 21 avec les fourreaux 22 et l'ensemble des éléments du vérin avec les chapes 48, cette action permet de diriger les éléments de propulsion du véhicule.

La figure 3 montre une disposition de propulsion utilisant des chenilles. La chape 48 porte le moto-réducteur lié en rotation à la poulie motrice 49 entraînant une courroie 53 qui entraîne elle-même un galet 50 entraînant une chenille tournant entre les galets 50 et 51, tendue par le galet 51 et soutenue par un galet 52. Les galets 50, 52, 51 tournant en liaison pivotent dans la chape 48. Le galet 52 intermédiaire supporte la chenille pour l'empêcher de fléchir face aux obstacles qui se présenteraient face à elle. La chenille est disposée telle que sa face de contact avec les obstacles soit inclinée par rapport à la surface de la paroi 1 d'un angle d'environ 45°. La chenille 54 est au contact de la paroi 1 sur une surface limitée par la courbure donnée à la chenille par le galet 50. Ce contact localisé entre la chenille et la surface du tube dans lequel elle roule permet une rotation de la chape 48 autour de l'axe du vérin, dans le cas d'un changement de direction du véhicule, la chenille pouvant glisser sur la paroi, l'étendue du contact étant limitée. Selon une disposition préférée, la chenille se trouve d'un côté du vérin et le moteur entraînant la chenille de l'autre côté, éloignée de la paroi pour s'écarter des obstacles qui se présenteraient.

La figure 4 montre la disposition de trois vérins avec des roues. L'alimentation en air se fait dans la partie centrale avec l'élément 40 par trois orifices distribuant indépendamment le gaz dans chaque vérin.

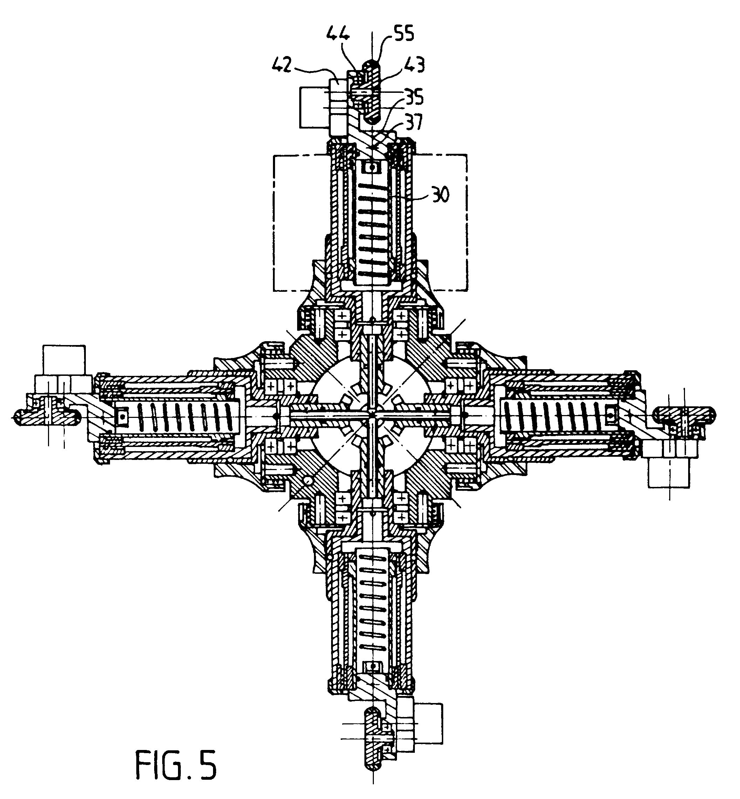

La figure 5 montre la disposition de quatre vérins avec des roues, les chapes 35 portant ces éléments de motorisation. Les chapes 35 sont interchangeables avec les chapes 47 décrites précédemment, liées aux tiges de vérin 30 par la goupille 37.

Le mécanisme permettant la rotation des roues motrices est montré par cette figure en exemple de réalisation. Il est composé d'un moto-réducteur 42 commandé indépendamment l'un de l'autre sur chaque patte de l'arbre de sortie 43 lié à la roue 55 et tournant dans un pivot 44 supporté par la chape 35. La roue se trouve en porte-à-faux par rapport à son pivot 44 de telle sorte que portée par sa liaison pivot du côté du moteur, elle ne le soit absolument pas de l'autre afin de dégager tout l'espace et lui permettre de s'éloigner d'obstacles qui pourraient se présenter d'un côté et faciliter la rotation des roues face à ces obstacles. La figure 4 donne la disposition du véhicule dans un tube 1, mais aussi comment cette disposition des roues en porte-à-faux permet de rouler sur une surface plane 45.

La figure 6 montre par le dessin d'une coupe transversale de la tourelle une disposition avec un orifice où un vérin a été enlevé. L'orifice est bouché par un bouchon 56 et maintenu comme les corps des vérins par un encliquetage à billes 26.

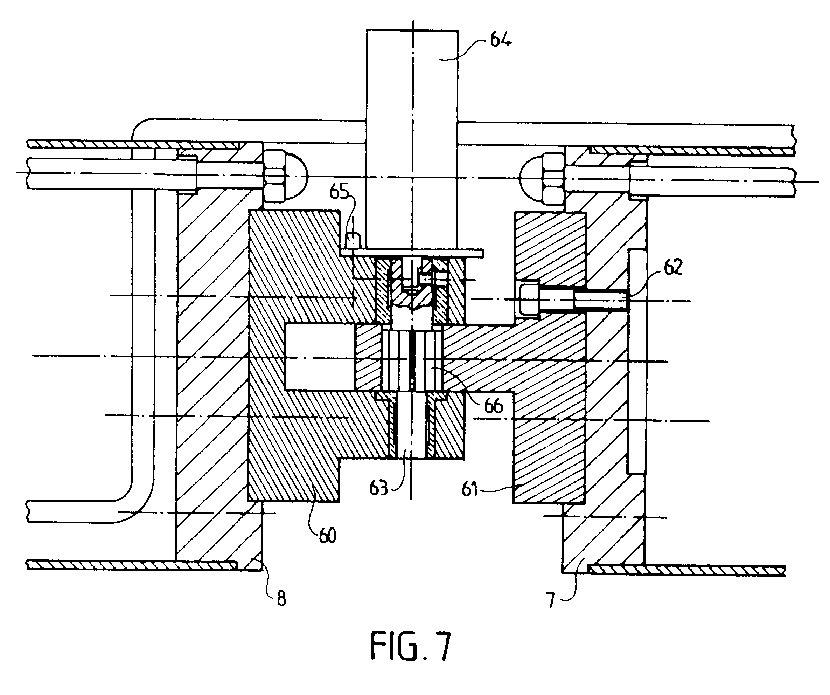

La figure 7 montre, par un dessin en coupe transversale, le pivot central. Ce mécanisme est réalisé par une chape dont un élément 60 est solidaire du bâti arrière 8. L'autre partie 61 est solidaire du bâti avant 7 par des fixations identiques comme 62. L'axe du pivot est montré en 63 dont la partie centrale dispose de formes, comme des cannelures 66 par exemple, assurant la liaison en rotation avec la partie 61. L'axe 63 peut pivoter dans l'élément 60, comme le montre la figure 7, et lié en rotation au moto-réducteur 64 ; celui-ci est fixé à l'élement 60 par 65. La rotation de la partie 61 par rapport à l'élément 60 peut donc être assurée par l'axe moteur 63, mais le pivot est également réversible quand le moteur n'est pas commandé.

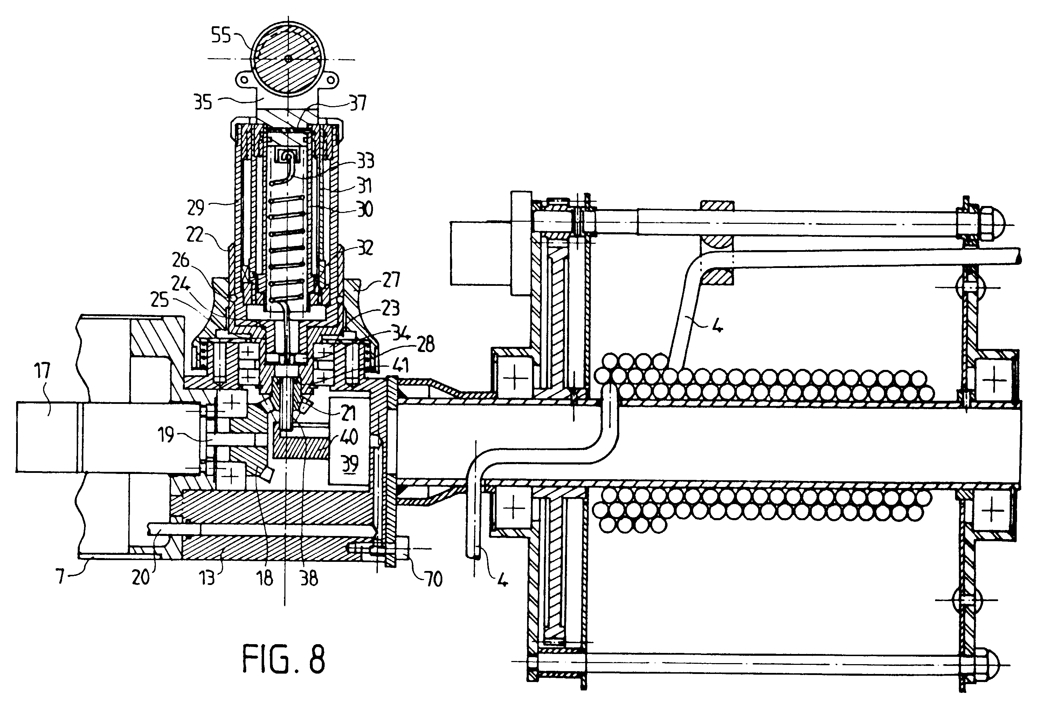

La figure 8 montre, par un dessin dans une coupe longitudinale du corps du véhicule dans sa partie arrière, l'enrouleur de l'ombilic 4 fixé par 70 sur la tourelle arrière 13.

Le mécanisme de la caméra est présenté à la figure 3, il permet de mouvoir la caméra dans un mouvement de rotation autour du bâti 7 et également dans le plan passant par l'axe longitudinal du bâti 7 pour des observations dans les directions de ce plan.

## Revendications

1. Véhicule autopropulsé destiné à se déplacer dans des espaces sensiblement circulaires tels que des tuyauteries (1), ce véhicule étant relié à un ombilic de liaison et comprenant une structure centrale porteuse (7, 8) dont les éléments sont articulés et portent chacun au moins trois vérins télescopiques, ces vérins étant disposés en étoile et de manière équidistante par jeu de vérins dans des plans perpendiculaires à l'axe longitudinal des éléments qui les portent, chacun de ces vérins étant monté sur pression pour s'adapter à la configuration géométrique des espaces circulaires, chacun de ces vérins présentant une extrémité libre portant un élément de propulsion (54), ces éléments de propulsion permettant au véhicule de progresser dans lesdits espaces en étant plaqués contre la surface interne de ces espaces, caractérisé en ce que les vérins sont portés par des tourelles permettant un centrage du véhicule dans les espaces circulaires, des moyens étant supplémentairement prévus pour entraîner en rotation tous les vérins (10, 11) de chaque jeu simultanément autour de leur axe longitudinal afin de diriger lesdits éléments de propulsion (54) et, par conséquent, de contourner des obstacles, et les vérins eux-mêmes étant actionnables individuellement.

2. Véhicule selon la revendication 1, caractérisé en ce que les élements de propulsion (54) sont soit des roues portées par une chape (35), soit des chenilles portées par une chape (48).

3. Véhicule selon l'une des revendications 1 ou 2, caractérisé en ce que les tiges des vérins sont télescopiques, un ressort de traction au centre étant accroché au fond du vérin (29) et à la chape (35).

4. Véhicule selon l'une des revendications 1 à 3, caractérisé en ce que les vérins ont des tiges (30 et 31) présentant des moyens (32) pour tourner ensemble avec le vérin (29) autour de leur axe longitudinal.

5. Véhicule selon l'une des revendications 1 à 4, caractérisé en ce que les tourelles (12 et 13) portées par les structures centrales porteuses (7, 8) comportent, soit trois, soit quatre cavités pour porter les vérins (29).

6. Véhicule selon l'une des revendications 1 à 5, caractérisé en ce que chaque tourelle (12) comporte des cavités pour porter les vérins, chacune de ces cavités disposant de parties tournantes (22 et 21) dans un pivot (23), avec des moyens comme un hexagone creux (25) pour entraîner en rotation le fond du vérin (29).

7. Véhicule selon l'une des revendications 1 à 6, caractérisé en ce que chaque vérin dispose de moyens de démontage comprenant des billes placées dans des trous d'un fourreau (22), pénétrant dans une rainure circulaire du vérin (29), immobilisées dans leur position par un manchon (27), et en ce que ce dernier élément peut être glissé longitudinalement dans l'axe du vérin par l'écrasement d'un moyen élastique (28) pour permettre aux billes de sortir de la gorge du vérin (29).

8. Véhicule selon l'une des revendications 1 à 7, caractérisé en ce que les vérins de chaque tourelle (12 et 13) sont entraînés ensemble en rotation par une roue d'engrenage conique (18) et que celle-ci est entraînée par un moteur.

9. Véhicule selon l'une des revendications 1 à 8, caractérisé en ce que les vérins (29) de chaque tourelle (12) sont alimentés en gaz par un moyen de distribution (39) et des tubulures (40 et 38).

10. Véhicule selon l'une des revendications 1 à 9, caractérisé en ce que les fourreaux (22) peuvent être fermés par un bouchon (56).

11. Véhicule selon la revendication 2, caractérisé en ce que chaque roue est portée par un pivot (44) disposé d'un côté seulement de celle-ci.

12. Véhicule selon l'une des revendications 1 à 11, caracterisé en ce que le contact entre la roue (36) et la paroi (1) perpendiculaire à l'axe du vérin se trouve dans le prolongement de l'axe longitudinal de rotation du vérin.

13. Véhicule selon l'une des revendications 1 à 12, caractérisé en ce que chaque chenille (54) forme un plan incliné dans le sens d'avance du véhicule, et est enroulée autour du galet (50) disposé dans le prolongement de l'axe de rotation longitudinal du vérin.

14. Véhicule selon l'une des revendications 2 et 13, caractérisé en ce que chaque chenille est entraînée par un galet (50), lui-même entraîné par un organe moteur (48) disposé derrière le vérin (29) du côté opposé à la chenille (54).

15. Véhicule selon l'une des revendications 1 à 14, caractérisé en ce que les quatre vérins de chaque tourelle sont disposés deux à deux, leur axe longitudinal sur une même droite et disposés également de telle sorte que les axes des vérins de l'avant du véhicule soient parallèles avec ceux de l'arrière.

16. Véhicule selon l'une des revendications 1 à 15, caractérisé en ce que les bâtis (7, 8) sont pivotants autour d'un axe (63) parallèle aux axes des vérins.

17. Véhicule selon la revendication 16, caractérisé en ce que l'axe (63) avec un moyen de liaison en rotation (66) est lié avec une partie (61) fixé sur le bâti (7) et que l'axe (63) lié au moteur (64) est lui-même solidaire d'un élément (60) fixé sur le bâti (8).

18. Véhicule selon la revendication 1, caractérisé en ce qu'il porte un enrouleur (6) d'ombilic et en ce qu'un deuxième enrouleur (5) est également placé en position fixe à l'extérieur de la paroi (1).

## Patentansprüche

1. Selbstangetriebenes Fahrzeug zum Fahren in im wesentlichen kreisrunden Räumen, wie Rohrleitungen (1), das an einen Verbindungschlauch angeschlossen ist und eine tragende Mittelstruktur (7, 8) aufweist, deren Elemente gelenkig miteinander verbunden sind und je wenigstens drei teleskopierende Arbeitszylinder tragen, welche je Zylindergruppe sternförmig und mit gleichem Zwischenabstand in zur Längsachse der sie tragenden Elemente rechtwinkligen Ebenen angeordnet sind, wobei jeder dieser Arbeitszylinder unter Druck setzbar angeordnet ist, um sich an die geometrische Konfiguration der kreisrunden Räume anzupassen, ein freies Endstück aufweist, das ein Antriebsorgan (54) trägt, wobei diese Antriebsorgane es dem Fahrzeug ermöglichen, sich in den genannten Räumen unter Anpressung gegen die Innenfläche dieser Räume fortzubewegen,
dadurch **gekennzeichnet**, daß die Arbeitszylinder von Revolverköpfen getragen sind, die eine Zentrierung des Fahrzeugs in den kreisrunden Räumen ermöglichen, wobei zusätzliche Mittel für den gleichzeitigen Drehantrieb aller Arbeitszylinder (10, 11) jeder Gruppe um ihre Längsachse vorgesehen sind, um die genannten Antriebsorgane (54) auszurichten und folglich Hindernisse zu umgehen, und die Arbeitszylinder selbst einzeln betätigbar sind.

2. Fahrzeug nach Anspruch 1,
dadurch **gekennzeichnet**, daß die Antriebsorgane (54) entweder von einem Gehäuse (35) getragene Räder oder von einem Gehäuse (48) getragene Raupenketten sind.

3. Fahrzeug nach einem der Ansprüche 1 und 2,
dadurch **gekennzeichnet**, daß die Stangen der Arbeitszylinder teleskopierend sind, wobei eine Zugfeder in der Mitte am Boden des Arbeitszylinders (29) und am Gehäuse (35) eingehängt ist.

4. Fahrzeug nach einem der Ansprüche 1 bis 3,
dadurch **gekennzeichnet**, daß die Arbeitszylinder Stangen (30 und 31) aufweisen, die mit Mitteln (32) zum gemeinsamen Drehen mit dem Arbeitszylinder (29) um ihre Längsachse versehen sind.

5. Fahrzeug nach einem der Ansprüche 1 bis 4,
dadurch **gekennzeichnet**, daß die von den tragenden Mittel strukturen (7, 8) getragenen Revolverköpfe (12 und 13) entweder drei oder vier Vertiefungen für die Aufnahme der Arbeitszylinder (29) aufweisen.

6. Fahrzeug nach einem der Ansprüche 1 bis 5,
dadurch **gekennzeichnet**, daß jeder Revolverkopf (12) Vertiefungen für die Aufnahme der Arbeitszylinder aufweist, wobei jede dieser Vertiefungen Drehteile (22 und 21) in einem Drehgelenk (23) mit Mitteln wie ein hohles Sechseck (25) zum Drehantreiben des Bodens des Arbeitszylinders (29) umfaßt.

7. Fahrzeug nach einem der Ansprüche 1 bis 6,
dadurch **gekennzeichnet** , daß jeder Arbeitszylinder Demontagemittel aufweist, die Kugeln umfassen, welche in Löchern einer Pinole (22) in Stellung gebracht sind, in eine kreisförmige Nut des Arbeitszylinders (29) eindringen und, in ihrer Stellung durch eine Hülse (27) gehalten sind, und daß das letztgenannte Bauteil in der Achse des Arbeitszylinders durch Zusammendrücken eines elastischen Bauteils (28) längsverschoben werden kann, um das Austreten der Kugeln aus der Nut des Arbeitszylinders (29) zu ermöglichen.

8. Fahrzeug nach einem der Ansprüche 1 bis 7,
dadurch **gekennzeichnet**, daß die Arbeitszylinder jedes Revolverkopfes (12 und 13) durch ein Kegel zahnrad (18) gemeinsam drehangetrieben sind, und daß letzteres durch einen Motor angetrieben ist.

9. Fahrzeug nach einem der Ansprüche 1 bis 8,
dadurch **gekennzeichnet** , daß die Arbeitszylinder (29) jedes Revolverkopfes (12) durch eine Verteilereinrichtung (39) und Durchlässe (40 und 38) mit Gas versorgt werden.

10. Fahrzeug nach einem der Ansprüche 1 bis 9,
dadurch **gekennzeichnet**, daß die Pinolen (22) durch einen Stopfen (56) verschließbar sind.

11. Fahrzeug nach Anspruch 2,
dadurch **gekennzeichnet,** daß jedes Rad von einem Drehlager (44) getragen ist, das auf nur einer Seite des Rades angeordnet ist.

12. Fahrzeug nach einem der Ansprüche 1 bis 11,
dadurch **gekennzeichnet**, daß die Berührung zwischen dem Rad (36) und der zur Achse des Arbeitszylinders rechtwinkligen Wand (1) in der Verlängerung der Längsdrehachse des Arbeitszylinders stattfindet.

13. Fahrzeug nach einem der Ansprüche 1 bis 12,
dadurch **gekennzeichnet** , daß jede Raupenkette (54) eine in Richtung der Vorwärtsbewegung des Fahrzeugs geneigte Ebene bildet und die in der Verlängerung der Längsdrehachse des Arbeitszylinders angeordnete Rolle (50) umschlingt.

14. Fahrzeug nach einem der Ansprüche 2 bis 13,
dadurch **gekennzeichnet** , daß jede Raupenkette durch eine Rolle (50) angetrieben ist, welche selbst durch ein Antriebsorgan (48) angetrieben ist, das hinter dem Arbeitszylinder (29) auf der der Raupenkette (54) entgegengesetzten Seite angeordnet ist.

15. Fahrzeug nach einem der Ansprüche 1 bis 14,
dadurch **gekennzeichnet**, daß die vier Arbeitszylinder jedes Revolverkopfes paarweise, mit ihrer Längsachse auf ein und derselben Gerade liegend und ferner so angeordnet sind, daß die Achsen der Arbeitszylinder vom Vorderteil des Fahrzeugs parallel zu den Achsen der Arbeitszylinder vom Hinterteil sind.

16. Fahrzeug nach einem der Ansprüche 1 bis 15,
dadurch **gekennzeichnet,** daß die Gestelle (7, 8) um eine zu den Achsen der Arbeitszylinder parallele Achse (63) schwenkbar sind.

17. Fahrzeug nach Anspruch 16,
dadurch **gekennzeichnet**, daß die Achse (63) mit einem Mittel (66) zur drehfesten Verbindung mit einem am Gestell (7) befestigten Bauteil (61) verbunden ist, und daß die mit dem Motor (64) verbundene Achse (63) selbst mit einem am Gestell (8) befestigten Bauteil (60) fest verbunden ist.

18. Fahrzeug nach Anspruch 1,
dadurch **gekennzeichnet** , daß es eine Wickelvorrichtung (6) für den Verbindungsschlauch trägt, und daß ferner eine zweite Wickelvorrichtung (5) außerhalb der Wand (1) ortsfest angeordnet ist.

## Claims

1. Self-propelled vehicle intended to move in essentially circular spaces such as pipelines (1), this vehicle being connected to a connecting umbilical cord and comprising a central load bearing structure (7, 8) the elements of which are articulated and each carries at least three telescopic jacks, these jacks being arranged in a star shape and equidistant manner by series of jacks in planes perpendicular to the longitudinal axes of the elements carrying them, each of these jacks being pressure mounted to be adapted to the geometrical configuration of the circular spaces, each of these jacks having a free end carrying a driving member (54), these driving members enabling the vehicle to move in said spaces by being pressed on the inner surface of these spaces, characterized in that the jacks are carried by turrets enabling the vehicle to be centered in the circular spaces, means being further provided for rotatively driving all the jacks (10, 11) of each series simultaneously around their longitudinal axis in order to control said driving members (54) and, consequently, to wind around obstacles, and the jacks themselves being able to be individually operated.

2. Vehicle according to claim 1, characterized in that the driving members (54) are taken among wheels carried by a cap (35) and caterpillars carried by a cap (48).

3. Vehicle according to one of claims 1 or 2, characterized in that the rods of the jacks are telescopic, a central tension spring being hooked to the bottom of the jack (29) and to the cap (35).

4. Vehicle according to one of claims 1 to 3, characterized in that the jacks have rods (30, 31) having means (32) for rotating together with the jack (29) about their longitudinal axis.

5. Vehicle according to one of claims 1 to 4, characterized in that the turrets (12 and 13) carried by the central load bearing structures (7, 8) have either three or four cavities for carrying the jacks (29).

6. Vehicle according to one of claims 1 to 5, characterized in that each turret (12) is provided with cavities for bearing the jacks, each of these cavities having parts (22 and 21) rotating in a pivot (23), with means, as a hollow hexagon (25), for rotatively driving the bottom of the jack (29).

7. Vehicle according to one of claims 1 to 6, characterized in that each jack comprises disassembling means comprising balls positioned in holes of a sheath (22) penetrating into a circular groove of the jack (29), immobilized in their position by a sleeve (27), and in that the later element can longitudinally slide in the axis of the jack by pressing a resilient means (28) for enabling the balls to emerge from the groove of the jack (29).

8. Vehicle according to one of claims 1 to 7, characterized in that the jacks of each turret (12 and 13) are driven together in rotation by a bevel gear (18) and in that the same is driven by a motor.

9. Vehicle according to one of claims 1 to 8, characterized in that the jacks (29) of each turret (12) are supplied with gas by a distribution means (39) and pipes (40, 38).

10. Vehicle according to one of claims 1 to 9, characterized in that the sheaths (22) are closable by a plug (56).

11. Vehicle according to claim 2, characterized in that each wheel is carried by a pivot (44) arranged on only one of its sides.

12. Vehicle according to one of claims 1 to 11, characterized in that the contact between the wheel (36) and the wall (1) perpendicular to the axis of the jack is in the extension of the longitudinal rotation axis of the jack.

13. Vehicle according to one of claims 1 to 12, characterized in that each caterpillar (54) forms an inclined plane in the direction of advance of the vehicle, and is wound around the roller (50) arranged in the extension of the longitudinal axis in rotation of the jack.

14. Vehicle according to one of claims 2 to 13, characterized in that each caterpillar is driven by a roller (50), itself driven by a motor means (48) arranged behind the jack (29) of the side opposite to the caterpillar (54).

15. Vehicle according to one of claims 1 to 14, characterized in that the four jacks of each turret are arranged two by two, their longitudinal axis on the same straight line, and also arranged so that the axes of the jacks at front of the vehicle are parallel with those at rear of the vehicle.

16. Vehicle according to one of claims 1 to 15, characterized in that the frames (7, 8) pivot about a spindle (63) parallel to axes of the jacks.

17. Vehicle according to claim 16, characterized in that the spindle (63), with a means (66) for connection in rotation, is connected to a part (61) fixed on the frame (7), and the spindle (63), connected to the motor (64), is itself rigidly connected to an element (60) fixed onto the frame (8).

18. Vehicle according to claim 1, characterized in that it carries a winder (6) for an umbilical cord, and a second winder (5) is also placed in a fixed position outside the wall (1).
